# EUROPEAN PATENT SPECIFICATION

(11) **EP 1 686 467 B1**
(45) Date of publication and mention of the grant of the patent: **12.03.2008**
(21) Application number: 05001917.3
(22) Date of filing: 31.01.2005
(51) Int. Cl.: G06F 9/445

(54) **Method and system for correcting errors in read-only memory devices, and computer program product therefor**
Verfahren, System und Computerprogrammprodukt zur Korrektur von Fehlern in einem Festwertspeicher
Procédé, système et progiciel pour la correction des fautes dans un mémoire morte

(43) Date of publication of application: 02.08.2006
(73) Proprietor: STMicroelectronics S.r.l., 20041 Agrate Brianza (Milano) (IT)
(72) Inventor: Grossier, Nicolas Bernard, 20059 Oreno di Vimercate Milano (IT); Kumar, Chilakala Ravi, Noida-201301 Uttar Pradesh (IN); Pezzini, Saverio, 20059 Vimercate Milano (IT)
(74) Representative: Bosotti, Luciano

(56) References cited:
- US-A1- 2001 013 091
- US-A1- 2002 124 161
- US-B1- 6 237 120

## Description

### Field of the invention

The invention relates to techniques for correcting errors in read-only memory devices.

### Description of the related art

Most application codes of current use today are embedded in read-only memory devices like e.g. Read Only Memory (ROM) devices, flash memory devices, and Electrically Erasable Programmable Read-Only Memory (EEPROM) devices.

Memory patches are widely used with read-only or non-volatile memories that require special procedure to be updated (e.g. flash). A memory patch is a readable/writable shadow unitary set of data (instruction or data with 16/32 bit) automatically selected in place of the original data when enabled. A memory patch is useful to correct late-found errors in application code (ROM correction), and to debug code located in a read-only memory device (ROM, flash, EEPROM) providing the possibility to set several breakpoints on a specific address.

Sometimes patches are needed to fix a defined problem, especially when the correction of a single instruction is not enough to solve the problem.

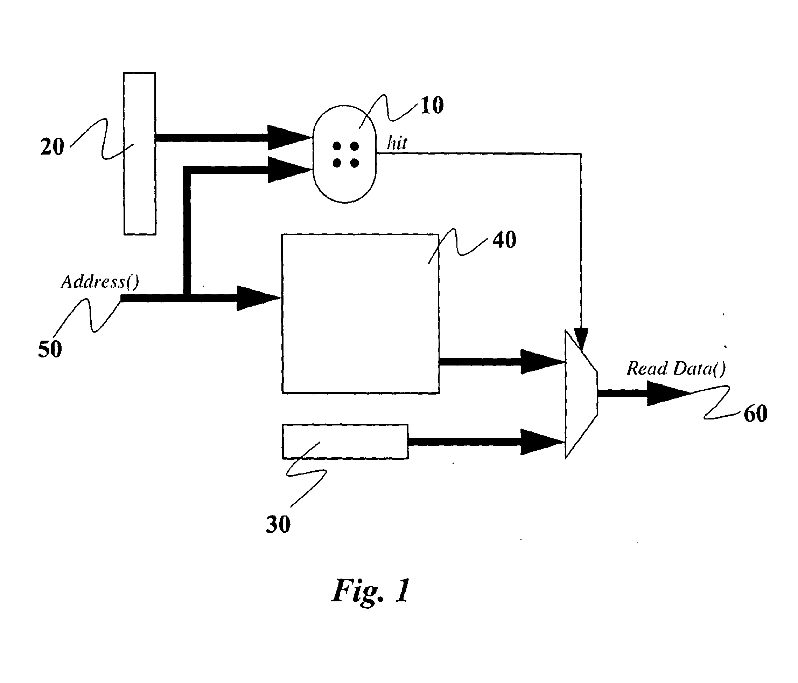

As shown in Figure 1, a patch can be implemented by means of a comparator 10, a patch address value 20, and a patch data value 30. When an address 50 that contains an error and needs to be patched is accessed, the comparator 10 detects it by comparing the address 50 with the patch address value 20. The patch data 30 is sent back, as a read data 60, in the place of the data stored at the location indicated by the address 50 in a memory 40.

In the case of a late-detected bug, it may be difficult to correct the code using only one patch address. For that purpose it is customary to use several patches or to "jump" to some patch-code function written in a volatile memory like Static Random Access Memory (SRAM), or Dynamic Random Access Memory (DRAM).

Jumping to a new address further than +/-32Mbytes of the actual PC in ARM V4 processor architecture normally requires at least two instructions: a first instruction to load a register with the new PC address destination, and a BX instruction or LDR PC, [Rn] instruction to jump to the new PC address destination.

This requires to patch at least two instruction addresses in the memory space, and therefore use two memory patches: two comparators, two patch data registers, two patch address registers (or a patch address register and an "incrementer" to generate the value of the second patch address, which is the address immediately following the patch address register value).

More specifically the present invention relates to a method and a system according to the preambles of claims 1 and 6, which are known e.g. from US 2001/013091 A1.

### Object and summary of the invention

While such prior art arrangements are capable of providing satisfactory results, the need is felt for an improved solution adapted to ensure a minimum amount of patches needed to correct an error in a code stored in a read-only memory device.

The object of the invention is thus to provide a fully satisfactory response to this need.

According to the present invention, that object is achieved by means of a method having the further features set forth in Claim 1 that follow. The invention also relates to a corresponding system as set forth in Claim 6 as well as a related computer program product as set forth in Claim 9, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A significant advantage of the arrangement described herein is that it allows to implement a long-jump in only one instruction.

Another advantage of the arrangement described herein is the possibility to use only one patch instead of two, and thus providing more available patches (or using less gate to implement equivalent functionality).

### Brief description of the annexed drawings

The invention will now be described, by way of example only, with reference to the enclosed figures of drawing, wherein:
- Figure 1, related to the prior art, has already been described in the foregoing;
- Figure 2 is an examplary representation of patch implementation according to the arrangement described herein; and
- Figure 3 shows an example of timing diagram explicative of the arrangement described herein.

### Detailed description of preferred embodiments of the invention

It is possible to emphasize the fact that the arrangement described herein enables to implement a long-jump patch by patching only one instruction. The difficulty with patching memory is, in general, represented by the identification of the right instruction to be replaced to implement the patch. This becomes even more difficult when it is necessary to patch more than one instruction, for example in the case of long jump implementation.

An optimized code may have some branches entering the function at address n and branches entering the function at address n+1. If for some reason it is necessary to patch address n, then it is no more possible to use a long jump if more than one instruction is needed (for example "MOVE RO = new address MSB", "ADD PC = RO<<16 + new address LSB") because branch at address n+1 would generates erroneous execution flow (in this case, a jump at address R0<<16 + new address LSB, without the initialization of R0).

The arrangement described herein essentially implements a pseudo low-cost long-jump instruction using only one patch. This consequently reduces the number of patches needed to correct an error in the code (or increases the number of available patches for error correction).

The arrangement described herein is based on a nOPC signals provided by the core of an ARM microprocessor and available as sideband signals on the Native or Advanced High-performance Bus (AHB) busses. This signal can be used to discriminate between code accesses and data accesses.

The use of an ARM7TDMI processor is only an example, and other type of processor can be utilized. In particular, in the solution described herein, in order to implement this kind of patches, a processor with the following characteristics can be employed:
- the possibility to discriminate opcode memory access from data memory access (this is done by nOPC (or HPROT[1]) in the case of an ARM processor), and
- the possibility to implement an instruction for PC modification, which enables generate a PC update with a data read access at the same address as the code memory that has just been read (this is done by LDR PC, [PC-0x8] in the case of an ARM processor).

The underlying principle of the arrangement described herein is to provide different patch-data depending on whether the core is performing an opcode access or a data access to the patched address.

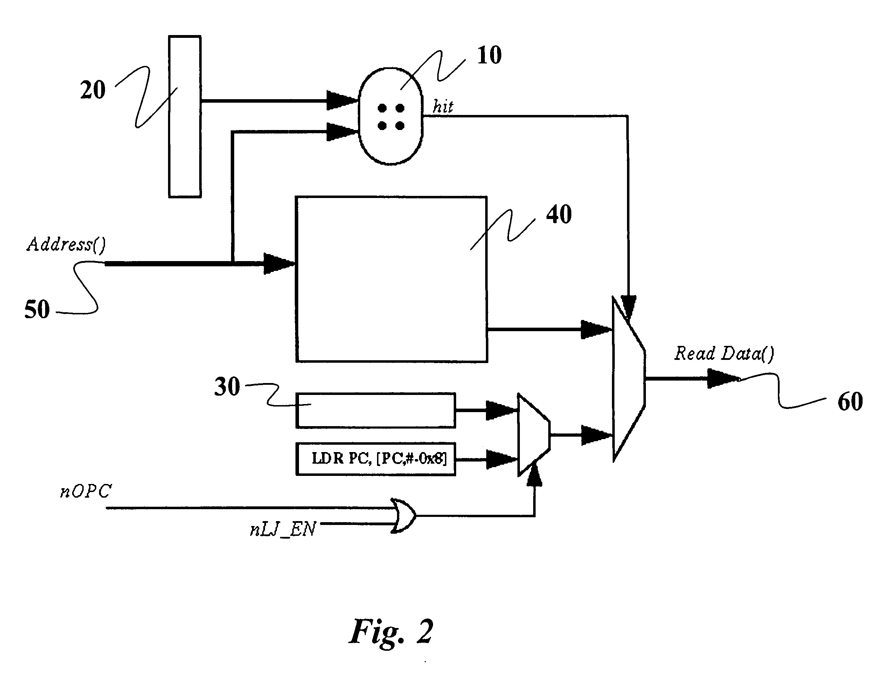

This principle is portrayed is shown in Figure 2, wherein the blocks identical or equivalent to those already described in connection with Figure 1 are designated with the same reference numbers used in the foregoing.

More specifically:
- in the case of a code fetch, a fixed ARM opcode LDR PC, [PC, #-PCinc] is provided to the core of the microprocessor;
- in the case of a data read, the new 32-bit PC destination is provided.

With this method, it is possible to perform a long jump, without having to deal with problems of address alignment for the comparator, while also saving some bits. In fact, the instruction is a fixed value, which does not need to be registered, and only the address is saved in the 32-bit patch-data register.

A further bit nLJ_EN enables the long-jump patch when needed, otherwise the patch can be used in a standard way.

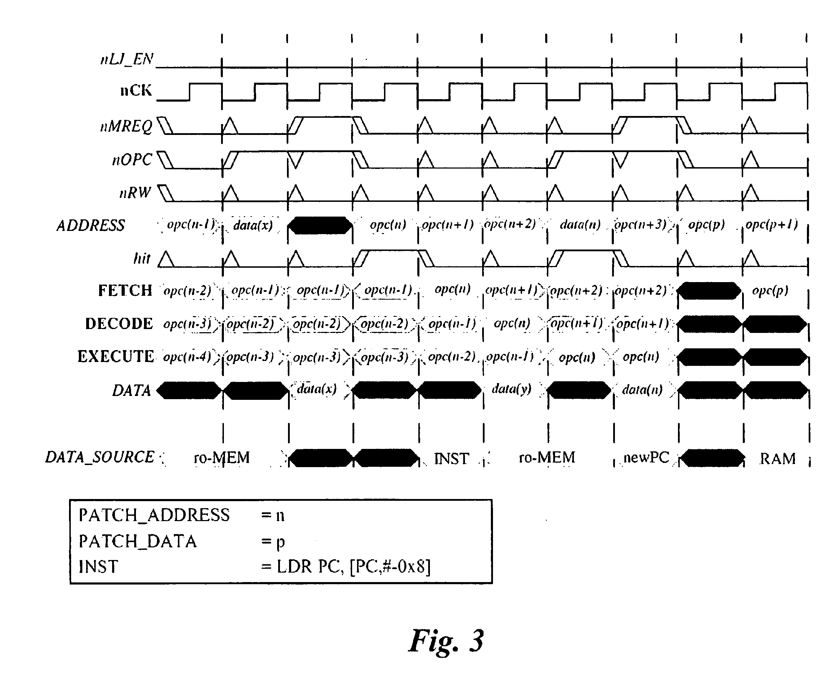

For example, Figure 3 refers to the case of an ARM7TDMI microprocessor (3-stage pipeline, PCinc = 0x8), and describes the status of the core pipeline (FETCH, DECODE, EXECUTE), the access done to the memory patch logic (CODE_ACCESS, DATA_ACCESS) and the status of the signals described in the foregoing.

Specifically, Figure 3 shows the accesses to read-only memory, the accesses to the patch, the accesses to RAM containing patch code, and the accesses to RAM containing data accesses.

The opcode at the address n-3 is accessed to address x, whereas the opcode at the address n is the patch code which generate the load at n.

When the code arrives at the patched address n, the 'LDR PC, [PC-0x8]' instruction is fetched.

When this instruction reaches the EXECUTE stage of the ARM pipeline, it will load the content of address PC-0x8 which will be equal to the patched address (PC has incremented by 0x8 while the instruction was processed into the pipeline).

The PC is loaded with the new address to jump to and the core fetches the new instruction.

Without prejudice to the underlying principles of the invention, the details and the embodiments may vary, also appreciably, with reference to what has been described by way of example only, without departing from the scope of the invention as defined by the annexed claims.

## Claims

1. A method of correcting errors in read-only memory devices (40) by means of memory patches, wherein patch data (30) is used as read data (60) in the place of erroneous data stored at a given location (50) in said memory (40), including the steps of:
- providing a processing core adapted to perform opcode accesses as well as data accesses to memory addresses (50) being patched, and
- providing different patch-data (30) for correcting errors depending on whether said core is performing a code access or a data access to an address (50) being patched,
**characterized in that** it includes the steps of:
- selecting said processing core as a pipeline processing core wherein a load instruction ('LDR PC, [PC-0x8]') reaches an execution (EXECUTE) stage in said pipeline,
- when code arrives at a patched address (n), fetching said load instruction ('LDR PC, [PC-0x8]'),
- when said load instruction reaches said execution stage in said pipeline, loading the content of the address equal to the patched address,
- loading said processing core with a new address to jump to, and
- causing said processing core to fetch a new instruction.

2. The method of claim 1, **characterized in that** it includes the steps of:
- selecting said processing core as a processing core adapted to provide nOPC signals available as sideband signals on at least one bus, and
- discriminating between code accesses and data accesses based on said nOPC signals.

3. The method of either of claims 1 or 2, **characterized in that** it includes the step of performing a jump to a patch-code function (30) written in a memory.

4. The method of claim 3, **characterized in that** it includes the step of selectively performing said jump to locate a long-jump patch.

5. A system for correcting errors in read-only memory devices (40) by means of memory patches, wherein patch data (30) is used as read data (60) in the place of erroneous data stored at a given location (50) in said memory (40), the system including a processing core adapted to perform opcode accesses as well as data accesses to memory addresses (50) being patched, said processing core configured for providing different patch-data (30) for correcting errors depending on whether said core is performing a code access or a data access to an address (50) being patched,
**characterized in that** said processing core is a pipeline processing core wherein a load instruction (`LDR PC, [PC-0x8]') reaches an execution (EXECUTE) stage in said pipeline, said processing core configured for:
- when code arrives at a patched address (n), fetching said load instruction ('LDR PC, [PC-0x8]'),
- when said load instruction reaches said execution stage in said.pipeline, loading the content of the address equal to the patched address,
- loading said processing core with a new address to jump to, and
- fetching a new instruction.

6. The system of claim 5, **characterized in that** said processing core is a processing core adapted to provide nOPC signals available as sideband signals on at least one bus, wherein code accesses and data accesses are discriminated based on said nOPC signals.

7. The system of either claims 5 or 6, **characterized in that** said processing core is configured for performing a jump to a patch-code function (30) written in a memory.

8. The system of claim 7, **characterized in that** said processing core is configured for selectively performing said jump to locate a long-jump patch.

9. A computer program product loadable in the memory of at least one computer and including software code portions adapted to perform the steps of the method of any of claims 1 to 4.

## Patentansprüche

1. Verfahren zum Korrigieren von Fehlern in Festwertspeichern (40) mittels Speicher-Ausbesserungen, wobei Ausbesserungs-Daten (30) als Lesedaten (60) anstelle von an einer gegebenen Stelle (50) in dem Speicher (40) gespeicherten fehlerhaften Daten verwendet werden, mit folgenden Schritten:
- Vorsehen eines Verarbeitungs-Kernes, der zum Ausführen sowohl von Befehlscode-Zugriffen als auch von Daten-Zugriffen auf mit einer Ausbesserung versehene Speicheradressen (50) eingerichtet ist, und
- Vorsehen unterschiedlicher Ausbesserungs-Daten (30) zum Korrigieren von Fehlern in Abhängigkeit davon, ob der Kern einen Code-Zugriff oder einen Daten-Zugriff auf eine mit einer Ausbesserung versehene Adresse (50) durchführt,
**dadurch gekennzeichnet, dass** es folgende Schritte aufweist:
- Auswählen des Verarbeitungs-Kernes als einen Pipeline-Verarbeitungs-Kern, bei dem in der Pipeline eine Ladeanweisung ('LDR PC, [PC-0x8]') eine Ausführungsstufe (EXECUTE) erreicht,
- Holen der Ladeanweisung ('LDR PC, [PC-0x8]'), wenn der Code an einer mit einer Ausbesserung versehenen Adresse (n) ankommt,
- Laden des Inhaltes der Adresse, welche gleich der mit einer Ausbesserung versehenen Adresse ist, wenn die Ladeanweisung in der Pipeline die Ausführungsstufe erreicht,
- Laden des Verarbeitungs-Kernes mit einer neuen anzuspringenden Adresse, und
- Veranlassen des Verarbeitungs-Kernes, eine neue Anweisung zu holen.

2. Verfahren nach Anspruch 1, **dadurch gekennzeichnet, dass** es folgende Schritte aufweist:
- Auswählen des Verarbeitungs-Kerns als einen Verarbeitungs-Kern, der zum Liefern von nOPC-Signalen eingerichtet ist, die auf mindestens einem Bus als Seitenband-Signale verfügbar sind, und
- Unterscheiden zwischen Code-Zugriffen und Daten-Zugriffen auf der Grundlage der nOPC-Signale.

3. Verfahren nach einem der Ansprüche 1 oder 2, **dadurch gekennzeichnet, dass** es den Schritt des Ausführens eines Sprunges zu einer in einen Speicher geschriebenen Ausbesserungscode-Funktion (30) beinhaltet.

4. Verfahren nach Anspruch 3, **dadurch gekennzeichnet, dass** es den Schritt des selektiven Ausführens des Sprunges zum Aufsuchen einer Weitsprung-Ausbesserung beinhaltet.

5. System zum Korrigieren von Fehlern in Festwertspeichern (40) mittels Speicher-Ausbesserungen, wobei Ausbesserungs-Daten (30) als Lesedaten (60) anstelle von an einer gegebenen Stelle (50) in dem Speicher (40) gespeicherten fehlerhaften Daten verwendet werden, wobei das System einen zur Durchführung sowohl von Befehlscode-Zugriffen als auch von Daten-Zugriffen auf ausgebesserte Speicheradressen (50) eingerichteten Verarbeitungs-Kern beinhaltet, wobei der Verarbeitungs-Kern zum Liefern unterschiedlicher Ausbesserungs-Daten (30) zum Korrigieren von Fehlern in Abhängigkeit davon, ob der Kern einen Code-Zugriff oder einen Daten-Zugriff auf eine mit einer Ausbesserung versehene Adresse (50) durchführt, konfiguriert ist,
**dadurch gekennzeichnet, dass** der Verarbeitungs-Kern ein Pipeline-Verarbeitungskern ist, bei dem eine Ladeanweisung ('LDR PC, [PC-0x8]') in der Pipeline eine Ausführungs-Stufe (EXECUTE) erreicht, wobei der Verarbeitungs-Kern konfiguriert ist zum:
- Holen der Ladeanweisung ('LDR PC, [PC-0x8]'), wenn Code bei einer mit einer Ausbesserung versehenen Adresse (n) ankommt,
- Laden des Inhaltes der Adresse, welche gleich der mit einer Ausbesserung versehenen Adresse ist, wenn die Ladeanweisung in der Pipeline die Ausführungsstufe erreicht,
- Laden des Verarbeitungs-Kernes mit einer neuen Adresse, auf die zu springen ist, und
- Holen einer neuen Anweisung.

6. Verfahren nach Anspruch 5, **dadurch gekennzeichnet, dass** der Verarbeitungs-Kern ein Verarbeitungs-Kern ist, der zum Liefern von auf mindestens einem Bus als Seitenband-Signalen verfügbaren nOPC-Signalen eingerichtet ist, wobei Code-Zugriffe und Daten-Zugriffe auf der Grundlage der nOPC-Signale unterschieden werden.

7. System nach Anspruch 5 oder 6, **dadurch gekennzeichnet, dass** der Verarbeitungs-Kern zum Ausführen eines Sprunges auf eine in einen Speicher geschriebene Ausbesserungscode-Funktion (30) konfiguriert ist.

8. System nach Anspruch 7, **dadurch gekennzeichnet, dass** der Verarbeitungs-Kern zum selektiven Ausführen des Sprunges zum Aufsuchen einer Weitsprung-Ausbesserung konfiguriert ist.

9. Computerprogramm-Produkt, ladbar in den Speicher von mindestens einem Computer und Softwarecode-Teile aufweisend, die eingerichtet sind, um die Schritte des Verfahrens nach einem der Ansprüche 1 bis 4 auszuführen.

## Revendications

1. Procédé pour corriger des erreurs dans des dispositifs de mémoires mortes (40) à l'aide d'outils de correction de mémoires, dans lequel des données de correction (30) servent de données de lecture (60) à la place de données erronées stockées à un emplacement donné (50) dans ladite mémoire (40), comprenant les étapes consistant à :
- prévoir une mémoire de traitement à tores apte à exécuter des accès de codes opérations ainsi que des accès de données à des adresses (50) en mémoire faisant l'objet d'une correction, et
- prévoir différentes données de correction (30) pour corriger des erreurs selon que, oui ou non, ladite mémoire à tores est en train d'exécuter un accès de codes ou un accès de données à une adresse (50) en cours de correction,
**caractérisé en ce qu'**il comprend les étapes consistant à :
- choisir ladite mémoire de traitement à tores sous la forme d'une mémoire de traitement pipeline à tores dans laquelle une instruction de chargement ('LDR PC, [PC-0x8]') atteint un stade d'exécution (EXECUTE) dans ledit pipeline,
- lorsque le code parvient à une adresse corrigée (n), extraire ladite instruction de chargement ('LDR PC, [PC-0x8]'),
- lorsque ladite instruction de chargement atteint ledit stade d'exécution dans ledit pipeline, charger le contenu de l'adresse égal à l'adresse corrigée,
- charger dans ladite mémoire de traitement à tores une nouvelle adresse à atteindre par un saut, et
- amener ladite mémoire de traitement à tores à extraire une nouvelle instruction.

2. Procédé selon la revendication 1, **caractérisé en ce qu'**il comprend les étapes consistant à :
- choisir ladite mémoire de traitement à tores sous la forme d'une mémoire de traitement à tores apte à fournir des signaux nOPC disponibles comme signaux de bandes latérales sur au moins un bus, et
- distinguer entre les accès de codes et les accès de données d'après lesdits signaux nOPC.

3. Procédé selon l'une quelconque des revendications 1 et 2, **caractérisé en ce qu'**il comprend l'étape consistant à effectuer un saut jusqu'à une fonction de code de correction (30) inscrite dans une mémoire.

4. Procédé selon la revendication 3, **caractérisé en ce qu'**il comprend l'étape consistant à exécuter de manière sélective ledit saut pour localiser une correction à long saut.

5. Système pour corriger des erreurs dans des dispositifs de mémoires mortes (40) à l'aide d'outils de correction de mémoires, dans lequel des données de correction (30) servent de données de lecture (60) à la place de données erronées stockées à un emplacement donné (50) dans ladite mémoire (40), le système comprenant une mémoire de traitement à tores apte à exécuter des accès de codes opérations ainsi que les accès de données à des adresses (50) de mémoire en cours de correction, ladite mémoire de traitement à tores étant agencée pour produire différentes données de correction (30) servant à corriger des erreurs selon que, oui ou non, ladite mémoire à tores est en train d'exécuter un accès de codes ou un accès de données à une adresse (50) en cours de correction,
**caractérisé en ce que** ladite mémoire de traitement à tores est une mémoire de traitement pipeline à tores dans laquelle une instruction de chargement ('LDR PC, [PC-0x8]') atteint un stade d'exécution (EXECUTE) dans ledit pipeline, ladite mémoire de traitement à tores étant conçue pour :
- lorsqu'un code parvient à une adresse corrigée (n), extraire ladite instruction de chargement ('LDR PC, [PC-0x8]'),
- lorsque ladite instruction de chargement atteint ledit stade d'exécution dans ledit pipeline, charger le contenu de l'adresse égale à l'adresse corrigée,
- charger dans ladite mémoire de traitement à tores une nouvelle adresse destinée à être atteinte par un saut, et
- extraire une nouvelle instruction.

6. Système selon la revendication 5, **caractérisé en ce que** ladite mémoire de traitement à tores est une mémoire de traitement à tores apte à produire des signaux nOPC disponibles comme signaux de bandes latérales sur au moins un bus, lesdits accès de codes et lesdits accès de données étant distingués d'après lesdits signaux nOPC.

7. Système selon l'une quelconque des revendications 5 et 6, **caractérisé en ce que** ladite mémoire de traitement à tores est conçue pour effectuer un saut jusqu'à une fonction de codes de correction (30) inscrite dans une mémoire.

8. Système selon la revendication 7, **caractérisé en ce que** ladite mémoire de traitement à tires est conçue pour exécuter de manière sélective ledit saut afin de localiser une correction à long saut.

9. Progiciel pouvant être chargé dans une mémoire d'au moins un ordinateur et comprenant des parties formant codes logiciels aptes à exécuter les . étapes du procédé selon l'une quelconque des revendications 1 à 4.
